# EUROPÄISCHE PATENTSCHRIFT

(11) **EP 0 517 670 B1**
(45) Veröffentlichungstag und Bekanntmachung des Hinweises auf die Patenterteilung: **14.08.1996**
(21) Anmeldenummer: 92810420.7
(22) Anmeldetag: 02.06.1992
(51) Int. Cl.: B01J 19/30, B01D 3/22

(54) **Tragrost für Packungen in Stoffaustauschkolonnen**
Supporting grid for packing inside mass transfer columns
Grille de support pour garnissage dans des colonnes d'échange de matériaux

(30) Priorität: 07.06.1991 CH 1698/91
(43) Veröffentlichungstag der Anmeldung: 09.12.1992
(73) Patentinhaber: Sulzer Chemtech AG, CH-8404 Winterthur (CH)
(72) Erfinder: Plüss, Raymond Charles, CH-8451 Klein-Andelfingen (CH)
(74) Vertreter: Heubeck, Bernhard

(56) Entgegenhaltungen:
- EP-A- 0 257 152
- DE-A- 2 911 869
- US-A- 5 000 883

## Beschreibung

Die Erfindung betrifft einen Tragrost für Packungen in Stoffaustauschkolonnen mit wellenförmigem Profil und Gasdurchlassöffnungen. Packungen von Stoffaustauschkolonnen werden von Tragrosten, meist in Form von Gitterrosten, gehalten. Dabei werden geordnete Packungen beispielsweise gemäss DE-PS 27 22 424 oder auch sogenannte geschüttete Packungen, beispielsweise Pall-Ringe, eingesetzt. Stoffaustauschkolonnen sind oft in Abschnitte unterteilt, wobei die Flüssigkeit gesammelt und wieder verteilt wird und damit eine neue gleichmässige Flüssigkeitsverteilung über den Querschnitt erreicht und Konzentrationsprofile über dem Querschnitt abgebaut werden. An solchen Stellen können auch Zuläufe und Seitenentnahmen angebracht werden. Vor der Wiederverteilung der abtropfenden Flüssigkeit auf einen darunterliegenden Stoffaustauschabschnitt muss diese gesammelt und allenfalls mit einem von aussen zugeführten Zulaufstrom vereinigt und vermischt werden. Dies erfordert eine relativ aufwendige Sammelvorrichtung, z.B. bestehend aus einem Sammelboden mit Dampfkaminen und einem Flüssigkeitsauslass, über welchen die gesammelte Flüssigkeit einem darunterliegenden Flüssigkeitsverteiler zugeführt wird. Der Sammler kann auch aus einer Vielzahl von den ganzen Kolonnenquerschnitt überdeckenden Sammellamellen bestehen. Falls keine Durchmischung der Flüssigkeit notwendig ist, kann die Flüssigkeit aus dem Sammelboden auch direkt auf den unteren Austauschabschnitt durchtropfen. Ein Sammelboden muss dann über den ganzen Querschnitt gelocht sein. Damit wird aber keine ausreichende Vermischung der Flüssigkeit bewirkt, die Konzentrationsgradienten über den Querschnitt ausgleichen könnte.

Als Tragroste werden auch Buckelroste mit wellenförmigem Profil und Gasdurchlassöffnungen eingesetzt, welche z.B. aus einem profilierten Blech mit Schlitzen, Löchern oder aus Streckmetall bestehen. Der Vorteil dieser Wellenprofilierung liegt in der Vergrösserung der Fläche gegenüber einer ebenen Anordnung, wodurch ein grösserer Querschnitt für den Dampf- oder Gasdurchlass und damit ein reduzierter Druckabfall erreicht wird. Die Buckelform erhöht zudem die Steifigkeit und Tragfestigkeit eines Rostes.

Das Dokument DE-A-2 911 869 offenbart eine Tragplatte zum Abstützen einer Schüttung oder Packung von Füllkörpern in einer Kammer eines Turmes für die Behandlung eines Fluides.

Diese bekannten Anordnungen weisen jedoch noch erhebliche Nachteile auf. So sind grosse Konstruktionshöhen erforderlich und trotz wellenförmig vergrösserter Oberfläche tritt immer noch ein störend hoher Druckverlust auf. Bei grösseren Kolonnendurchmessern reicht zudem die Tragfähigkeit der gelochten Tragroste oft nicht aus, so dass z.B. ein einfacher Tragring am Kolonnenmantel nicht genügt, sondern noch zusätzliche Träger montiert werden müssen, was wiederum zusätzliche Kolonnenhöhe beansprucht. Die bekannten Konstruktionen sind überdies auch aufwendig herzustellen.

Es ist daher Aufgabe der vorliegenden Erfindung, diese Nachteile zu überwinden und einen einfacheren, raumsparenden und stabilen Tragrost zu schaffen, mit geringem Druckverlust für die Gasphase und mit geringer Neigung zum Fluten, welcher zusätzlich auch eine Flüssigkeitssammlerfunktion erfüllt.

Diese Aufgabe wird erfindungsgemäss durch einen Tragrost nach Anspruch 1 gelöst. Die abhängigen Ansprüche betreffen dabei vorteilhafte Ausführungen und Weiterentwicklungen der Erfindung. Die besonderen Vorteile der erfinderischen Lösung liegen darin, dass mit der neuen Tragroststruktur auf einfache Art, sowohl verbesserte mechanische und Stoffaustausch-Eigenschaften erreicht werden, als auch eine wesentliche Erweiterung seiner Funktionen. Dadurch, dass im unteren Bereich des Profils bis zur Minimalhöhe H1 keine Gasdurchlassöffnungen angeordnet sind, bildet dieser Bereich einen Flüssigkeitssammler. Der vorstehende Rand erzwingt andererseits ein Umfliessen der Gasdurchlassöffnungen durch die herabströmende Flüssigkeit. Die geschlossenen Profilkuppen und die durch den Rand erhöhte Strahlwirkung des Gases an den Oeffnungen wiederum verhindern ein mögliches Durchregnen. Und durch die Ausführung der Gasdurchlassöffnungen mit erhöhtem Rand werden zudem der Druckabfall reduziert und gleichzeitig Steifigkeit und Tragfestigkeit des Rostes erhöht.

Besonders gute Strömungsbedingungen und geringer Druckabfall können durch runde Aufbiegung der Gasdurchlassöffnungen erreicht werden (Venturi-Effekt). Vorteilhafte Dimensionierungen von Gasdurchlassöffnungen und Rändern können folgende Verhältnisse aufweisen: Ein Verhältnis von Krümmungsradius R der Randaufbiegung im Verhältnis zu horizontalem Durchmesser D von vorzugsweise 0.2 bis 1 ergibt günstige Strömungsverhältnisse. Ein Verhältnis von Randhöhe H3 zu Durchmesser D von vorzugsweise 0.2 bis 1 ergibt eine sichere Umleitung der Flüssigkeit um die Oeffnungen herum, während ein Verhältnis von freier Durchflussbreite D1 zwischen benachbarten Gasdurchlassöffnungen zu deren Durchmesser D von vorzugsweise 0.4 bis 1 den nötigen Raum für den sicheren Abfluss der Flüssigkeit in diesem Bereich ergibt. Diese freie Durchflussbreite D1 kann im unteren Bereich der Profilflanken grösser sein als im oberen, entsprechend der nach unten zunehmenden Flüssigkeitsmenge. Eine angemessen grosse Sammelrinne im unteren Teil des Profils wird erreicht durch ein Verhältnis von Minimalhöhe H1 zu Profilhöhe H von vorzugsweise 0.2 bis 0.5 und dadurch, dass die Talsohle den untersten Teil des Profiles bildet. Eine gute Ausnützung des Kolonnenquerschnitts mit günstigen Gas- und Flüssigkeitsführungseigenschaften kann erreicht werden durch eine Profilgestaltung, bei der die Profilkuppen A im Verhältnis zur Wellenlänge P zwischen vorzugsweise 0.1 und 0.3 liegen, sowie durch Profilflankenwinkel von vorzugsweise 5 bis 15°. Einfach herzustellende, kostengünstige Profile können aus Blech mit aufgebördelten Rändern oder aus Keramik mit aufgesetzten Rändern bestehen. Zur Anpassung an beliebige Kolonnendurchmesser können erfindungsgemässe Tragroste auch rationell und damit kostengünstig hergestellt werden, indem das Profil baukastenartig aus Teilen zusammengesetzt wird. Beispielsweise können Profile aus einzelnen Wellen oder Wellenpaaren zusammengesetzt sein oder es können je Flanken und Profilkuppe sowie Wellental als Sammelrinne separat zusammengesetzt sein. Weitere einfache Ausführungen können einen Tragrost mit einem oder einigen wenigen quer zu den Wellentälern verlaufenden Sammeltrögen und darüberliegenden Abflusslöchern aufweisen. Ein weiteres einfaches Profil kann auch seitlich je einen Ueberlauf in einen darunterliegenden Ringkanal als Sammeltrog an der Kolonnenwand aufweisen. Dieser Ringkanal dient dann gleichzeitig als Halterung des Rosts.

Im folgenden wird die Erfindung anhand von Figuren weiter erläutert. Dabei zeigt:
- Fig. 1: eine Prinzip-Darstellung eines erfindungsgemässen Tragrosts;
- Fig. 2: eine Anordnung eines Tragrosts mit seitlichen Abflüssen und Ringkanal in einer Stoffaustauschkolonne;
- Fig. 3a, b: eine Anordnung von Gasdurchlassöffnungen mit aufgebogenen Rändern und deren Strömungsverhältnisse;
- Fig. 4: ein Beispiel von Gasdurchlassöffnungen mit aufgesetztem Rand in Keramik;
- Fig. 5: wellenförmige Einzelprofile in Keramik;
- Fig. 6: einen Kolonnenquerschnitt mit Tragrost und einem quer zu den Wellen verlaufenden darunterliegenden Sammeltrog;
- Fig. 7a, b: eine Variante des Tragrosts, zusammengesetzt aus zwei Buckelprofilen mit unten angesetzter Sammelrinne als Profilwellental;
- Fig. 8: eine versetzte Anordnung von Gasdurchlassöffnungen;
- Fig. 9: ein Profil mit zusätzlicher Abdeckung über der Talsohle.

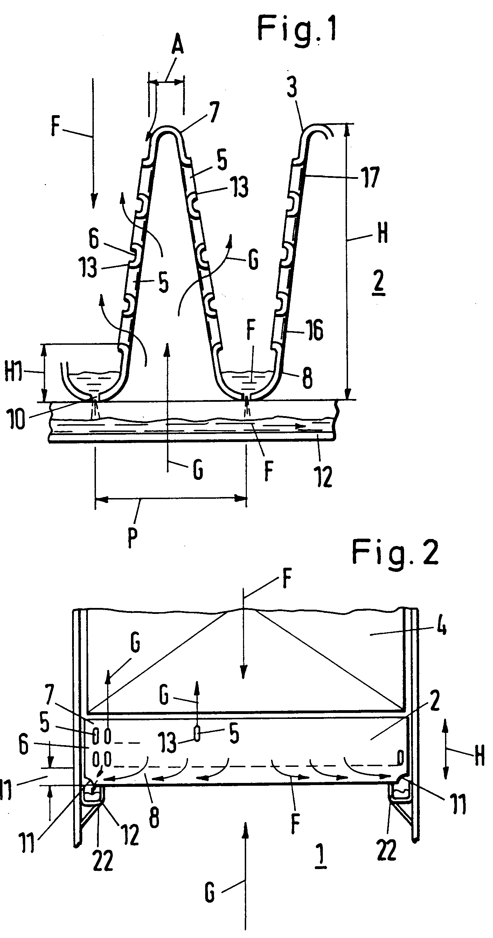

Die Prinzip-Darstellung eines erfindungsgemässen Tragrosts 2 von Fig. 1 zeigt ein wellenförmiges Profil 3 der Höhe H und der Wellenlänge P, z.B. aus einem Blech gebogen, mit einer relativ schmalen Kuppe 7, relativ steilen Flanken 6 und einer Talsohle 8, welche breiter oder mindestens so breit ist wie die Kuppe 7 mit Breite A. Die Talsohle 8 und die Kuppen 7 weisen keine Gasdurchlassöffnungen 5 auf. Diese sind alle in den Flanken 6 über einer Minimalhöhe H1 angebracht. Am untersten Punkt der Talsohle 8 ist ein Abflussloch 10 für die gesammelte Flüssigkeit F eingelassen. Die Flüssigkeit fällt dann in einen unmittelbar darunter angeordneten, quer zu den Wellen verlaufenden Sammeltrog 12. Die Gasdurchlassöffnungen 5 weisen einen gegen die Flüssigkeitsseite (F) hin erhöhten, vorstehenden Rand 13 auf, welcher die Gasströmung G begünstigt und auch das Profil 3 verstärkt und versteift.

Eine Anordnung eines erfindungsgemässen Tragrosts 2 im Querschnitt in einer Stoffaustauschkolonne 1 zeigt Fig. 2. Das Wellenprofil 3 trägt hier eine geordnete Packung 4. Die Talsohle 8 weist an beiden Enden je einen seitlichen Auslauf 11 als Abfluss auf, welcher die Flüssigkeit F in einen Ringkanal 22 als Sammeltrog 12 einspeist. Der Ringkanal 22 ist gleichzeitig auch als Halterung und Abstützung für den Tragrost 2 ausgebildet.

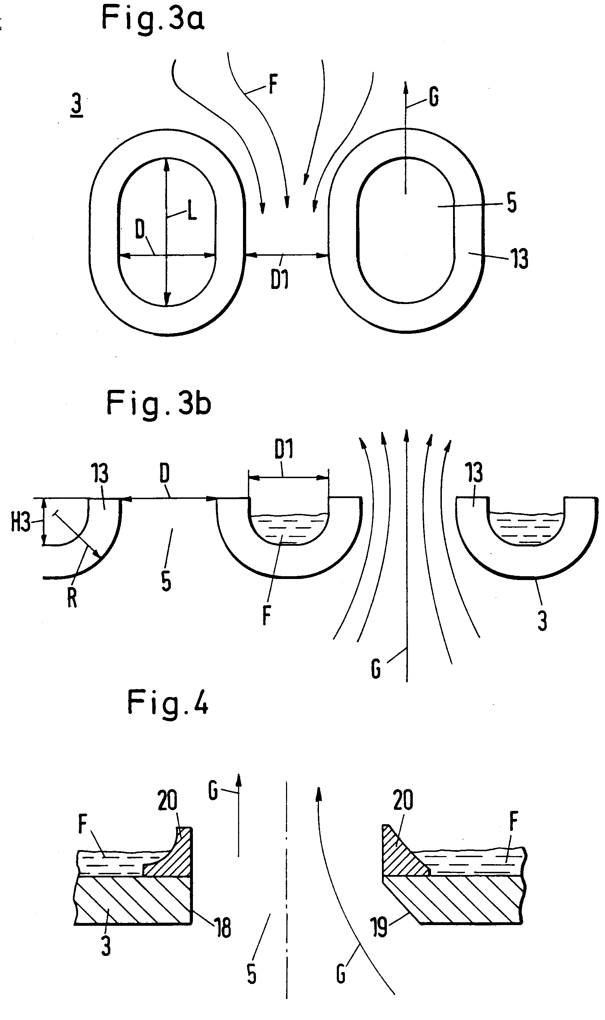

Die Figuren 3a, b zeigen Gasdurchlassöffnungen 5 in zwei Ansichten mit rund aufgebogenen Rändern 13, die gegen die Flüssigkeitsseite hin vorstehen. Diese Ränder 13 mit Höhe H3 bewirken ein Umströmen der Flüssigkeit F um die Oeffnungen 5 mit horizontalen Durchmesser D herum. Dabei muss die Flüssigkeit über der freien Durchlassbreite D1 zwischen benachbarten Oeffnungen 5 hindurch ablaufen. Entsprechend der nach unten zunehmenden Abflussmengen kann dabei die freie Durchlassbreite D1 im unteren Bereich 16 der Flanken 6 grösser gewählt werden als im oberen Bereich 17 (Fig. 1). Die Rundung der Oeffnungen 5 mit Krümmungsradius R bewirkt hier besonders günstige Strömungsverhältnisse für das Gas G, welches dank Venturi-Wirkung mit sehr geringem Druckverlust durch die Oeffnungen 5 hindurchströmt und infolge hoher Geschwindigkeit auch jedes Durchregnen von Flüssigkeit verhindert. Weil Gas und Flüssigkeit nicht aneinander vorbeifliessen müssen, wird der Druckverlust weiter reduziert und ein Fluten am Tragrost wirksam verhindert. Günstige Verhältnisse der Dimensionen R, D, D1, H3 und H zur Erzielung der erläuterten vorteilhaften synergistischen Effekte sind in den abhängigen Ansprüchen angegeben. Die Länge L der Oeffnungen 5 beträgt vorzugsweise meist das ein- bis dreifache des horizontalen Durchmessers D. Solche Profilformen können z.B. aus Blech mit aufgebördelten Rändern einfach hergestellt werden.

Eine Ausführungsform in Keramik mit aufgesetzten Rändern 20 zeigt Fig. 4. Dabei können die Gasdurchlassöffnungen 5 auch einen ganz einfachen geraden Rand 18 oder eine Begrenzung mit innerer Anschrägung 19 aufweisen, welche die Gasströmung G schon deutlich verbessert.

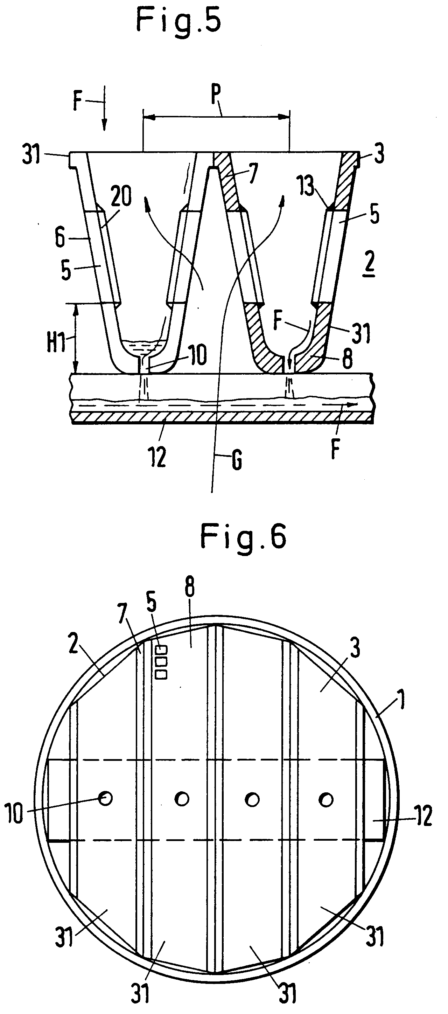

Fig. 5 zeigt als weiteres Beispiel eines Tragrostes aus Keramik zwei Einzelprofile 31 mit aufgesetztem Rand 13, welche einfach und rationell zu einer gewünschten Kolonnengrösse zusammengestellt werden können, wie in Fig. 6 dargestellt. Ueber den Querschnitt einer Kolonne 1 sind hier vier Einzelelemente 31 angeordnet. Ein Sammeltrog 12 verläuft quer zu den Elementen 31 mit je einem mittigen Abflussloch 10 zum Einspeisen der Flüssigkeit in den Sammeltrog 12. Dieser Trog 12 kann als Vorverteiler eines Trogverteilers dienen, wodurch Bauhöhe und Kosten eines separaten Sammlers eingespart werden.

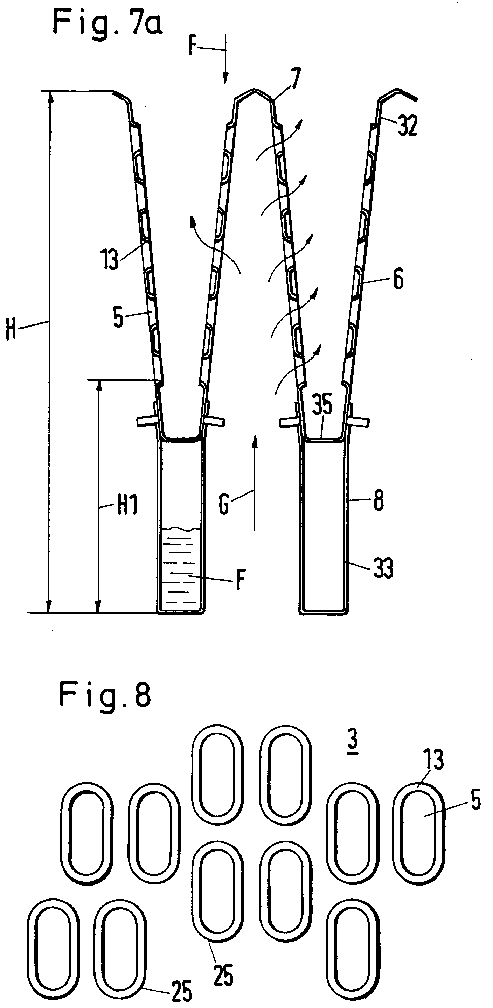

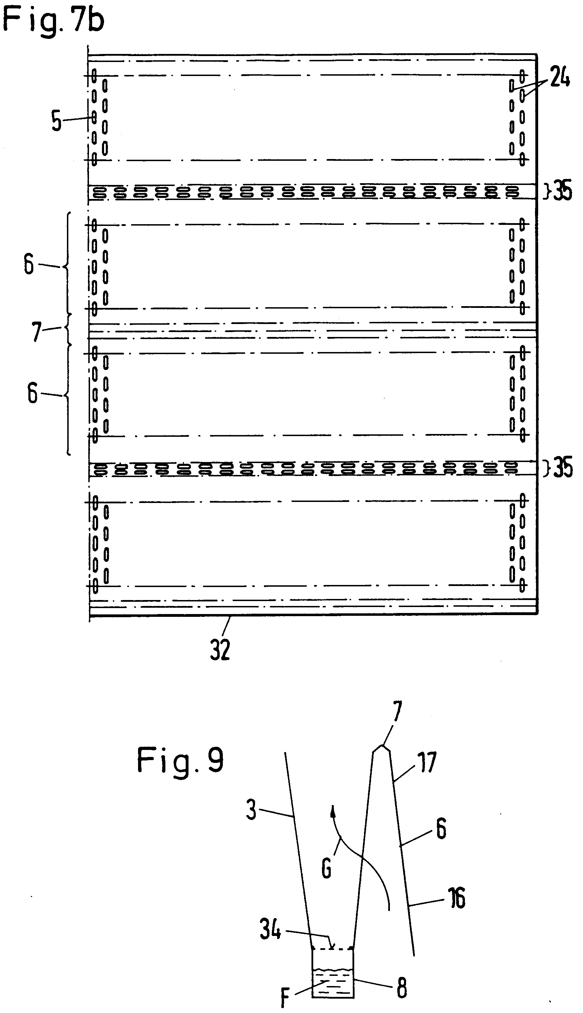

Eine weitere Variante eines Tragrosts wird nach Fig. 7a aus Paaren von Buckelprofilen 32 gebildet. Deren Wellental 8 besteht aus einer unten angehängten, separaten Sammelrinne 33. Während der gelochte flache Boden 35 als Träger z.B. für eine Schüttfüllung dient. Entsprechend dem Durchmesser einer Kolonne und der abzuführenden Flüssigkeitsmenge kann dabei eine entsprechende Höhe dieser Sammelrinne 33 gewählt werden. Das Doppelprofil 32 kann einfach aus Blech gestanzt, aufgebördelt und gebogen werden. Dessen Abwicklung ist in Fig. 7b dargestellt. Die Gasdurchlassöffnungen 5 sind hier einzeln versetzt angeordnet (24).

Fig. 8 zeigt ein weiteres Beispiel mit paarweise versetzten Gasdurchlassöffnungen (25). Die Aufbiegung der Oeffnungsränder 13 wirkt stark versteifend auf die Flanken 6 des Wellenprofils, vor allem wenn die Gasdurchlassöffnungen 5 versetzt angeordnet sind. Dadurch können bei gleicher Tragfähigkeit die Profilhöhe H verringert, platzraubende Träger vermieden oder bei gleicher Festigkeit wesentlich mehr Oeffnungen 5 angebracht werden, was die Kapazität der Kolonne weiter erhöht und den Druckverlust vermindert, oder es kann auch kostengünstigeres, dünneres Blech eingesetzt werden.

Fig. 9 zeigt ein weiteres Beispiel mit wellenförmigem Profil 3 mit einer zusätzlichen Abdeckung 34 über der Talsohle 8 zum Einsatz des Tragrostes in Kolonnen mit Schüttfüllkörpern. Diese Abdeckung 34 kann z.B. aus einem Metallgitter oder aus Streckmetall bestehen.

## Patentansprüche

1. Tragrost für Packungen in Stoffaustauschkolonnen mit wellenförmigem Profil (3), mit in den Flanken (6) des Profils angeordneten Gasdurchlassöffnungen (5), die oberhalb einer Minimalhöhe (H1) angeordnet sind und einen gegen die Flüssigkeitsseite hin erhöhten, vorstehenden Rand (13, 20) aufweisen, und mit geschlossenen Kuppen (7) des Profils, dadurch gekennzeichnet, dass die Talsohlen (8) des Profils (3) mit angesetzten Sammelrinnen (33) ausgebildet sind, die jeweils mindestens ein Abflussloch (10) oder einen seitlichen Auslauf (11) aufweisen, welches bzw. welcher über einem darunter liegenden Sammeltrog (12) angeordnet ist.

2. Tragrost nach Anspruch 1, dadurch gekennzeichnet, dass der Rand (13) der Gasdurchlassöffnungen rund aufgebogen ist.

3. Tragrost nach Anspruch 2, dadurch gekennzeichnet, dass der Krümmungsradius R der Randaufbiegung im Verhältnis zum horizontalen Durchmesser D der Gasdurchlassöffnungen (5) zwischen R/D = 0.2 und 1 liegt.

4. Tragrost nach einem der vorangehenden Ansprüche, dadurch gekennzeichnet, dass die Randhöhe H3 im Verhältnis zum Durchmesser D der Gasdurchlassöffnungen (5) zwischen H3/D = 0.2 und 1 liegt.

5. Tragrost nach einem der vorangehenden Ansprüche, dadurch gekennzeichnet, dass die keine Gasdurchlassöffnungen aufweisende Minimalhöhe H1 im Verhältnis zur Profilhöhe H zwischen H1/H = 0.2 und 0.5 liegt und dass dabei die Talsohle (8) die unterste Stelle des Profils bildet.

6. Tragrost nach einem der vorangehenden Ansprüche, dadurch gekennzeichnet, dass die freie Durchflussbreite D1 zwischen benachbarten Gasdurchlassöffnungen (5) im Verhältnis zu deren horizontalen Durchmesser D zwischen D1/D = 0.4 und 1 liegt.

7. Tragrost nach einem der vorangehenden Ansprüche, dadurch gekennzeichnet, dass die freie Durchflussbreite D1 im unteren Bereich (16) der Profilflanken (6) grösser ist als im oberen (17).

8. Tragrost nach einem der vorangehenden Ansprüche, dadurch gekennzeichnet, dass die Breite der Profilkuppen A im Verhältnis zur Wellenlänge P des Profils (3) zwischen A/P = 0.1 und 0.3 liegt.

9. Tragrost nach einem der vorangehenden Ansprüche, dadurch gekennzeichnet, dass das Profil (3) aus Blech besteht und aufgebördelte Ränder (13) aufweist.

10. Tragrost nach einem der Ansprüche 1 bis 8, dadurch gekennzeichnet, dass das Profil aus Keramik mit aufgesetzten Rändern (20) besteht.

11. Tragrost nach einem der vorangehenden Ansprüche, dadurch gekennzeichnet, dass die Gasdurchlassöffnungen versetzt angeordnet sind (24, 25).

12. Tragrost nach einem der vorangehenden Ansprüche, gekennzeichnet durch einen Winkel W der Profilflanken von 5 bis 15o.

13. Tragrost nach einem der vorangehenden Ansprüche, gekennzeichnet durch mindestens einen quer zu den Wellentälern verlaufenden darunterliegenden Sammeltrog (12).

14. Tragrost nach einem der vorangehenden Ansprüche, gekennzeichnet durch einen Ringkanal (22) als Sammeltrog an der Kolonnenwand.

15. Tragrost nach einem der vorangehenden Ansprüche, dadurch gekennzeichnet, dass das Profil aus Teilen (31, 32) zusammengesetzt ist.

## Claims

1. Supporting grate for packings in material exchange columns with a corrugated profile (3) and gas openings (5) disposed in the flanks (6) of the profile (3), which openings are arranged above a minimum height (H1) and have a projecting edge (13, 20) which is raised towards the fluid side, the domes (7) of the profile being closed, characterised in that the trough bottoms (8) of the profile (3) are constructed with attached collecting channels (33) each having at least one drain hole (10) or a lateral outlet (11) which hole or outlet is disposed above a collecting trough (12) therebeneath.

2. Supporting grate according to claim 1, characterised in that the edge (13) of the gas openings is rounded and bent upwards.

3. Supporting grate according to claim 2, characterised in that the ratio of the radius of curvature R of the bending up of the edge in relation to the diameter D of the gas openings (5) lies between R/D = 0.2 and 1.

4. Supporting grate according to any one of the preceding claims, characterised in that the ratio of the edge height H3 to the diameter D of the gas openings (5) lies between H3/D = 0.2 and 1.

5. Supporting grate according to any one of the preceding claims, characterised in that the ratio of the minimum height H1 having no gas openings to the profile height H lies between H1/H = 0.2 and 0.5 and the trough bottom forms the lowest point of the profile.

6. Supporting grate according to any one of the preceding claims, characterised in that the ratio of the free through-flow width D1 between adjacent gas openings (5) to the horizontal diameter D thereof lies between D1/D = 0.4 and 1.

7. Supporting grate according to any one of the preceding claims, characterised in that the free through-flow width D1 is greater in the lower region (16) of the profile flanks (6) than in the upper region (17).

8. Supporting grate according to any one of the preceding claims, characterised in that the ratio of the width of the profile domes A to the corrugation length P of the profile (3) lies between A/P = 0.1 and 0.3.

9. Supporting grate according to any one of the preceding claims, characterised in that the profile (3) is made from sheet material and has upwardly flanged edges (13).

10. Supporting grate according to any one of claims 1 to 8, characterised in that the profile is made from ceramic with superimposed edges (20).

11. Supporting grate according to any one of the preceding claims, characterised in that the gas openings are arranged offset (24, 25).

12. Supporting grate according to any one of the preceding claims, characterised by an angle W of the profile flanks of 5 to 15°.

13. Supporting grate according to any one of the preceding claims, characterised by at least one collecting trough (12) which runs transversely of the corrugation troughs and lies under them.

14. Supporting grate according to any one of the preceding claims, characterised by an annular channel (22) as a collecting trough on the column wall.

15. Supporting grate according to any one of the preceding claims, characterised in that the profile is assembled from parts (31, 32).

## Revendications

1. Grille de support pour garnissages dans des colonnes d'échange de matières, ladite grille de support présentant un profil ondulé (3), des ouvertures (5) de passage de gaz qui sont pratiquées dans les flancs (6) du profil, qui se trouvent au-dessus d'une hauteur minimale (H1) et qui comportent un bord en saillie (13, 20) surélevé en direction du côté liquide, et des sommets fermés (7) du profil, caractérisée en ce que les creux (8) du profil (3) comportent des rigoles collectrices rapportées (33) dont chacune comporte au moins un trou d'écoulement (10) ou une évacuation latérale (11) qui se trouve au-dessus d'une auge collectrice (12) située en dessous.

2. Grille de support selon la revendication 1, caractérisée en ce que le bord (13) des ouvertures de passage de gaz est relevé et arrondi.

3. Grille de support selon la revendication 2, caractérisée en ce que le rapport R/D du rayon de courbure R de la partie relevée du bord au diamètre horizontal D des ouvertures (5) de passage de gaz est compris entre 0,2 et 1.

4. Grille de support selon l'une des revendications précédentes, caractérisée en ce que le rapport H3/D de la hauteur de bord H3 au diamètre D des ouvertures (5) de passage de gaz est compris entre 0,2 et 1.

5. Grille de support selon l'une des revendications précédentes, caractérisée en ce que le rapport H1/H de la hauteur minimale H1, dépourvue d'ouvertures de passage de gaz, à la hauteur de profil H est compris entre 0,2 et 0,5, et en ce que le creux (8) constitue le point le plus bas du profit.

6. Grille de support selon l'une des revendications précédentes, caractérisée en ce que le rapport D1/D de la largeur libre de passage D1 entre des ouvertures voisines (5) de passage de gaz au diamètre horizontal D de celles-ci est compris entre 0,4 et 1.

7. Grille de support selon l'une des revendications précédentes, caractérisée en ce que la largeur libre de passage D1 est plus grande dans la zone inférieure (16) des flancs (6) du profil que dans la zone supérieure (17).

8. Grille de support selon l'une des revendications précédentes, caractérisée en ce que le rapport A/P de la largeur des sommets A du profil à la longueur P des ondulations du profil (3) est compris entre 0,1 et 0,3.

9. Grille de support selon l'une des revendications précédentes, caractérisée en ce que le profil (3) est réalisé en tôle et comporte des bords relevés (13).

10. Grille de support selon l'une des revendications 1 à 8, caractérisée en ce que le profil est réalisé en céramique avec des bords rapportés (20).

11. Grille de support selon l'une des revendications précédentes, caractérisée en ce que les ouvertures (24, 25) de passage de gaz sont disposées de manière décalée.

12. Grille de support selon l'une des revendications précédentes, caractérisée en ce que les flancs du profit forment un angle W compris entre 5 et 15°.

13. Grille de support selon l'une des revendications précédentes, caractérisée par au moins une auge collectrice (12) disposée en dessous et orientée transversalement aux creux de l'ondulation.

14. Grille de support selon l'une des revendications précédentes, caractérisée par un canal annulaire (22) qui fait fonction d'auge collectrice et est disposé contre la paroi de la colonne.

15. Grille de support selon l'une des revendications précédentes, caractérisée en ce que le profit est constitué d'éléments (31, 32).
